# EUROPEAN PATENT APPLICATION

(11) **EP 4 807 351 A1**
(43) Date of publication of application: **16.09.2026**
(21) Application number: 26164275.5
(22) Date of filing: 12.03.2026
(51) Int. Cl.: G01N 23/04, G06T 5/50, G06T 7/00

(54) **INSPECTION IMAGE DISPLAY DEVICE**

(30) Priority: 13.03.2025 JP 2025040648
(71) Applicant: Ishida Co., Ltd., Kyoto 606-8392 (JP)
(72) Inventor: IKEDA, Shinya, Ritto-shi, Shiga, 520-3026 (JP)
(74) Representative: Global IP Europe Patentanwaltskanzlei

(57) **Abstract**

Providing an inspection image display device to display images that make it easy to recognize undesirable parts in products. An X-ray inspection device serving as an inspection image display device comprises a conveyor to convey products, an X-ray irradiator to irradiate X-rays on the products conveyed by the conveyor, an X-ray detector to detect X-rays of a low energy band and a high energy band, an image generation unit, and a display. The image generation unit generates a first difference image by performing a subtraction process using a first transmission image based on the detection results for the X-rays of the low energy band, and a second transmission image based on the detection results for the X-rays of the high energy band. The image generation unit generates a second difference image by performing a subtraction process using the first difference image and either the first transmission image or the second transmission image. The display displays the second difference image.

## Description

### TECHNICAL FIELD

The present invention relates to an inspection image display device.

### BACKGROUND ART

Patent Literature 1 (Japanese Laid-open Patent Publication No. 2019-107605) discloses a device to display a transmission image (X-ray transmission image) on a display unit. The transmission image displayed on the display unit is used, for example, by a worker to recognize the locations of undesirable parts in products when removing the undesirable parts from the products.

### SUMMARY OF THE INVENTION

### <Problem the Invention is Intended to Solve>

In many cases, a worker can recognize undesirable parts from a transmission image. However, depending on the cause of what is undesirable, it can be difficult to recognize the undesirable parts. For example, when using transmission images for the work of removing extraneous matter present in undesirable parts, if a product and the extraneous matter have comparatively similar X-ray transmissibility, it becomes difficult for the worker to accurately recognize the undesirable parts from the transmission image.

If a computer can automatically and accurately identify the undesirable parts on the basis of the transmission image, it is conceivable that the computer could emphasize display of the undesirable parts through image processing, as disclosed in Patent Literature 1 (Japanese Laid-open Patent Publication No. 2019-107605). However, if it is difficult for the worker to clearly recognize the undesirable parts from the transmission image, the computer may be unable to accurately identify the locations of the undesirable parts or may miss the undesirable parts.

An object of the present invention is to provide an inspection image display device to display an image that allows a worker to easily recognize undesirable parts in a product.

### <Means for Solving Problem>

An inspection image display device according to a first aspect of the present invention comprises a conveying unit, an X-ray source, an X-ray detector, an image generation unit, and a display unit. The conveying unit is configured to convey products. The X-ray source is configured to irradiate X-rays on the products conveyed by the conveying unit. The X-ray detection unit is configured to detect X-rays of a first energy band and X-rays of a second energy band irradiated on the products. The image generation unit is configured to generate a first difference image by performing a subtraction process using a first transmission image based on the detection results for the X-rays of the first energy band and a second transmission image based on the detection results for the X-rays of the second energy band. The image generation unit is configured to generate a second difference image by performing a subtraction process using the first difference image and either the first transmission image or the second transmission image. The display unit is configured to display the second difference image.

In the inspection image display device of the first aspect, a second difference image in which undesirable parts are emphasized is displayed on the display unit. Therefore, it is easy for a worker to recognize undesirable parts in the products from the image displayed on the display unit.

An inspection image display device according to a second aspect of the present invention is the inspection image display device according to the first aspect, wherein the image generation unit is configured to correct luminance values of at least some pixels of the first difference image, and perform a subtraction process using the corrected first difference image and either the first transmission image or the second transmission image to generate the second difference image.

In the inspection image display device of the second aspect, undesirable parts can be emphasized in the second difference image by generating the second difference image using the corrected first difference image. In other words, the inspection image display device of the second aspect can generate and display a second difference image that makes it easier to recognize undesirable parts in the products.

An inspection image display device according to a third aspect of the present invention is the inspection image display device according to the second aspect, wherein the image generation unit is configured to perform a correction to increase the luminance value of pixels having a luminance greater than a first luminance value of the first difference image, or a correction to decrease the luminance value of pixels having a luminance less than a second luminance value of the first difference image, and perform a subtraction process using the corrected first difference image and either the first transmission image or the second transmission image to generate the second difference image.

In the inspection image display device of the third aspect, a second difference image that makes it particularly easy to recognize undesirable parts can be generated and displayed. This is because, in the first difference image, the correction is performed on the pixels corresponding to the undesirable parts, which are either more or less luminant than other parts (the contrast between the luminance of the pixels corresponding to the undesirable parts and the luminance of the pixels corresponding to other parts is increased), and then a subtraction process is performed on the first difference image and either the first transmission image or the second transmission image.

An inspection image display device according to a fourth aspect of the present invention is the inspection image display device according to any of the first through third aspects, further comprising an inspection unit. The inspection unit is configured to inspect whether or not undesirable parts are present using the first difference image. The display unit is configured to indicate, in the second difference image, locations where the undesirable parts detected by the inspection unit are present.

In the inspection image display device of the fourth aspect, since the locations of the undesirable parts, which can be detected by the inspection unit on the basis of the first difference image, are displayed in the second difference image, it is less likely that the worker will overlook the presence of the undesirable parts.

An inspection image display device according to a fifth aspect of the present invention is the inspection image display device according to any of the first through third aspects, further comprising an inspection unit. The inspection unit is configured to inspect whether or not undesirable parts are present using the second difference image. The display unit is configured to indicate, in the second difference image, locations where the undesirable parts detected by the inspection unit are present.

In the inspection image display device of the fifth aspect, since the second difference image is used for inspection, the inspection unit can detect undesirable parts with high sensitivity. In addition, in the inspection image display device of the fifth aspect, since the locations of the undesirable parts, which can be detected by the inspection unit on the basis of the second difference image, are displayed in the second difference image, it is less likely that the worker will overlook the presence of the undesirable parts.

An inspection image display device according to a sixth aspect of the present invention is the inspection image display device according to any of the first through fifth aspects, wherein the display unit is configured to display the second difference image inverted.

From viewpoints such as ease of work, the worker may sometimes flip the product over from the state the product is in when being transported by the conveyor, and then perform the work of processing the undesirable parts in the product. In such cases, if the generated second difference image is displayed on the display unit unmodified, the product in the second difference image and the actual product will be in an inverted state relative to each other, making it difficult for the worker to identify the undesirable parts from the image displayed on the display unit.

By contrast, in the inspection image display device of the sixth aspect, the second difference image is displayed inverted on the display unit (the second difference image is displayed with the product flipped front-to-back), and it is therefore easy for the worker to recognize undesirable parts.

### <Effects of Invention>

The inspection image display device of the present invention can display an image that allows a worker to easily recognize undesirable parts in a product.

### BRIEF DESCRIPTION OF THE DRAWINGS

FIG. 1 is a schematic plan view of an inspection processing system having an X-ray inspection device according to one embodiment of an inspection image display device of the present invention;
FIG. 2 is an external perspective view of the X-ray inspection device of FIG. 1;
FIG. 3 is a simple configuration drawing of an interior of a housing of the X-ray inspection device of FIG. 2;
FIG. 4 is a schematic depiction of a graph of a transmitted X-ray amount detected by line sensors of the X-ray inspection device of FIG. 2;
FIG. 5 is a block diagram of the X-ray inspection device of FIG. 2;
FIG. 6 is an example of the flowchart of a process of generating and displaying a second difference image in the X-ray inspection device of FIG. 2;
FIG. 7 is a schematic drawing of a product containing extraneous matter;
FIG. 8 is a schematic depiction of a first transmission image generated for the product in FIG. 7;
FIG. 9 is a schematic depiction of a first difference image generated for the product in FIG. 7;
FIG. 10 is a schematic depiction of a second difference image generated for the product in FIG. 7;
FIG. 11 is a schematic depiction of an example of a second difference image displayed on a display unit; and
FIG. 12 is a schematic depiction of an example of an inverted second difference image displayed on the display unit.

### DESCRIPTION OF EMBODIMENTS

An X-ray inspection device according to one embodiment of an inspection image display device of the present invention, and an inspection processing system provided with the X-ray inspection device, shall be described with reference to the drawings. The following embodiments are specific examples of the present invention and do not limit the technical scope of the invention.

### (1) Overall summary

An X-ray inspection device 10 according to one embodiment of an inspection image display device of the present invention is a device to generate and display transmission images (X-ray transmission images) obtained by irradiating X-rays on the products P, and images obtained by processing the transmission images.

The X-ray inspection device 10 of the present embodiment is a device to inspect whether or not there are undesirable parts in the products P on the basis of the transmission images. The details of the inspection are not limited; the X-ray inspection device 10 of the present embodiment performs extraneous matter inspection to inspect whether or not extraneous matter is present in the products P.

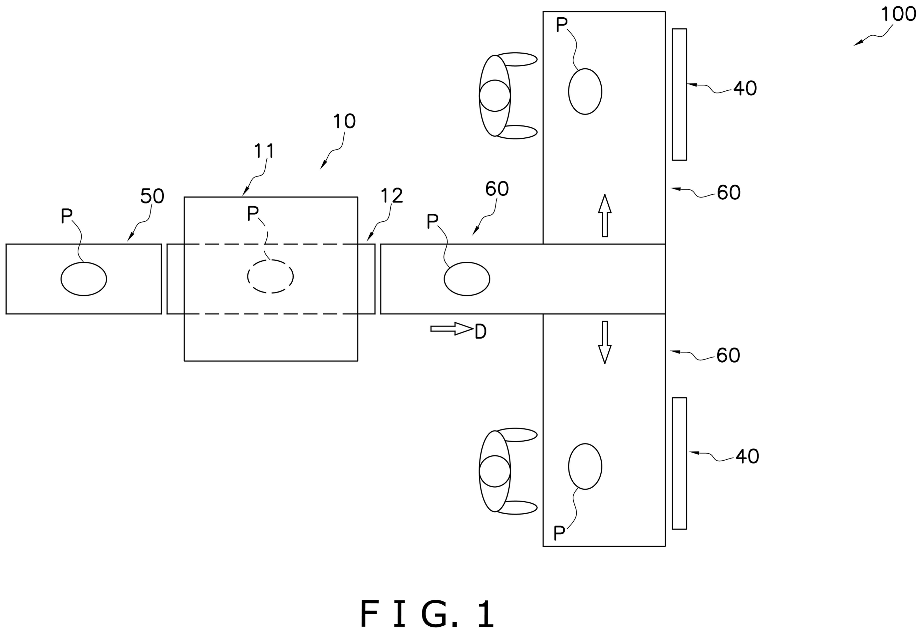

The X-ray inspection device 10 is not limited to any specific application; for example, the device can be incorporated into an inspection processing system 100 for foodstuffs (see FIG. 1).

In the inspection processing system 100, products (foodstuffs) P to be inspected are conveyed by an upstream conveyor 50. The type of products P is not limited; for example, the products P are chicken or fish fillets. The X-ray inspection device 10 performs an inspection on the conveyed products P and detects whether or not undesirable parts (in this embodiment, extraneous matter such as bones) are present in the products P. In addition, the X-ray inspection device 10 generates transmission images obtained by irradiating X-rays at the products P and images obtained by processing the transmission images, and displays the images on a first display 30 provided to the X-ray inspection device 10 and a second display 40 installed separately from a housing 11 (described hereinafter). The second display 40 is installed, for example, in a work area where processing is performed on the products P as needed. In the present embodiment, in the work area, a worker performs a process for removing extraneous matter such as bones contained in the products P from the products P.

In the present embodiment, the products P inspected by the X-ray inspection device 10 are all, regardless of the inspection results, conveyed by a downstream conveyor 60 to a work area located downstream of the X-ray inspection device 10. In the inspection processing system 100 shown in FIG. 1, the products P are sorted by a sorting mechanism (not shown) provided adjacent to the downstream conveyor 60, and are conveyed to two work areas.

However, the present invention is not limited to this configuration. Products P in which no undesirable parts are found as a result of the inspection may be conveyed to the next step (e.g., a packaging step), and only products P in which undesirable parts are found are conveyed to a work area.

### (2) Detailed description

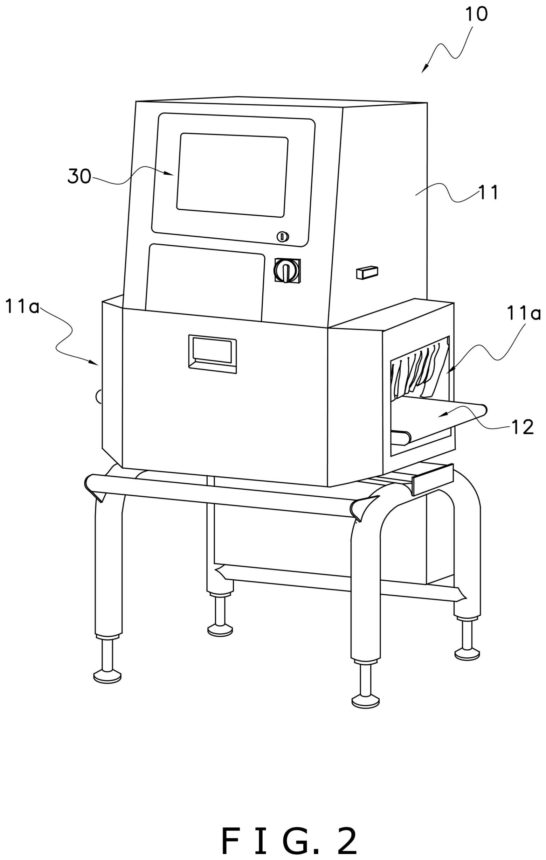

The X-ray inspection device 10 mainly has, as shown in FIGS. 2 to 5, a housing 11, a conveyor 12, an X-ray irradiator 13, a first line sensor 14 and a second line sensor 15, a first display 30, a second display 40, and a controller 20.

### (2-1) Housing

The housing 11 is a housing (shield box) to house the conveyor 12, the X-ray irradiator 13, the first line sensor 14, the second line sensor 15, and the controller 20. The display 30, various switches (not shown), etc., are disposed on an upper part of a front surface of the housing 11.

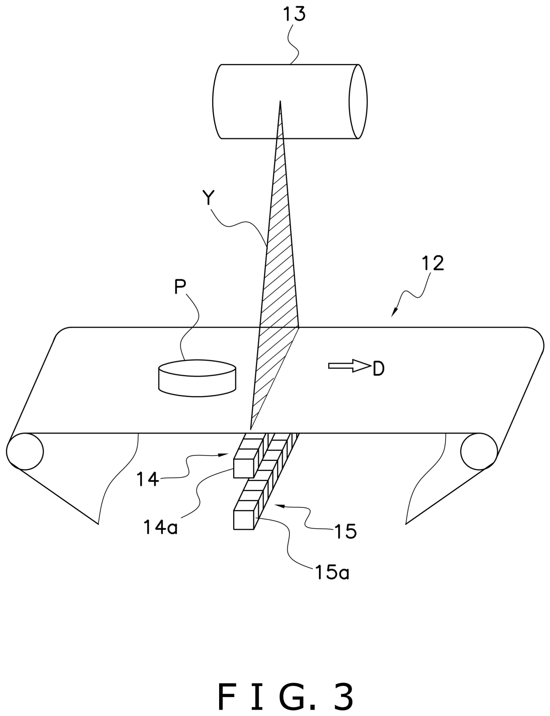

In side surfaces of the housing 11 on an upstream side and a downstream side in a conveying direction D of the conveyor 12 (see FIG. 3), openings 11a (see FIG. 2) for conveying the products P in and out are formed.

### (2-2) Conveyor

The conveyor 12 is an example of a conveying unit to convey the products P. The conveyor 12 is disposed so as to pass through both openings 11a of the housing 11. The conveyor 12 receives products P conveyed by the upstream conveyor 50, passes the products through an inspection area (where X-rays are irradiated on the products P) inside the housing 11, and delivers products that have passed through the inspection area to the downstream conveyor 60.

### (2-3) X-ray irradiator

The X-ray irradiator 13 is an example of an X-ray source. The X-ray irradiator 13 irradiates X-rays at the products P conveyed by the conveyor 12. The X-ray irradiator 13 is disposed above the conveyor 12 as shown in FIG. 3. The X-ray irradiator 13 irradiates X-rays in a fan-form emission range Y toward the line sensors 14, 15 disposed below the conveyor 12. As shown in FIG. 3, the emission range Y of the X-ray irradiator 13 extends perpendicularly to a conveying surface of the conveyor 12 and spreads in a direction orthogonal to the conveying direction D of the conveyor 12 (a width direction of a belt of the conveyor 12).

### (2-4) Line sensors

The first line sensor 14 and the second line sensor 15 are examples of X-ray detectors. The line sensors 14, 15 detect X-rays irradiated from the X-ray irradiator 13 and transmitted through the products P and the conveyor 12.

The first line sensor 14 and the second line sensor 15 detect X-rays of different energy bands (wavelengths) irradiated at the products P. In this embodiment, the first line sensor 14 detects X-rays in a low energy band having comparatively longer wavelengths, and the second line sensor 15 detects X-rays in a high energy band having comparatively shorter wavelengths.

In the present embodiment, the second line sensor 15 is disposed below the first line sensor 14, and the second line sensor 15 and the first line sensor 14 are aligned in the vertical direction as shown in FIG. 3. Of the X-rays irradiated from the X-ray irradiator 13, low-energy-band X-rays are detected by the first line sensor 14. Of the X-rays that pass through the first line sensor 14, medium-energy-band X-rays (X-rays in an intermediate energy band between the high-energy and low-energy bands) are removed by a filter (not shown) disposed between the first line sensor 14 and the second line sensor 15. High-energy-band X-rays that pass through the filter are detected by the second line sensor 15.

The first line sensor 14 mainly has numerous X-ray detection elements 14a, and the second line sensor 15 mainly has numerous X-ray detection elements 15a (see FIG. 3). The X-ray detection elements 14a, 15a are respectively installed horizontally and linearly in a direction orthogonal to the conveying direction D of the conveyor 12. The X-ray detection elements 14a, 15a each detect the amount of X-rays that have passed through the products P and the conveyor 12 (transmitted X-ray amount) for the target energy band, and output an X-ray transmission signal on the basis of the transmitted X-ray amount (detected X-ray intensity). The brightness (luminance) of each pixel in the low-energy transmission image (described hereinafter) is determined on the basis of the X-ray transmission signals outputted by the X-ray detection elements 14a, and the brightness of each pixel in the high-energy transmission image (described hereinafter) is determined on the basis of the X-ray transmission signals outputted by the X-ray detection elements 15a. In the transmission image, areas having a large amount of transmitted X-rays are displayed brightly (lightly), and areas having a small amount of transmitted X-rays are displayed darkly (densely).

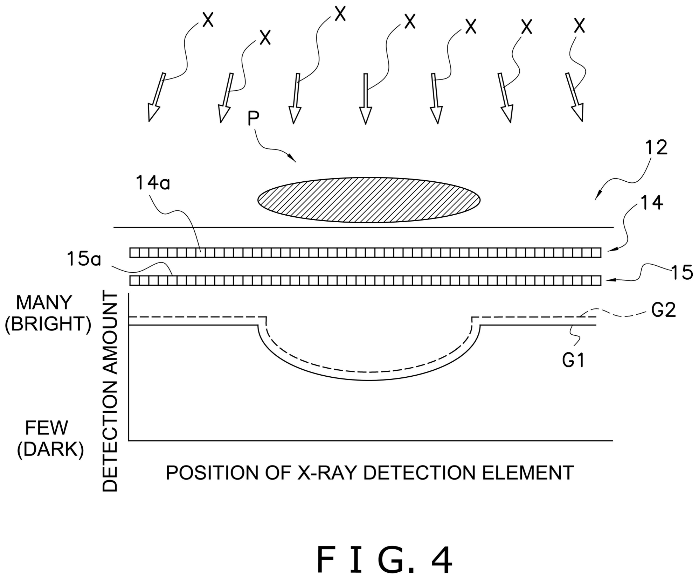

FIG. 4 is a graph of an example of the transmitted X-ray amount detected by the X-ray detection elements 14a, 15a. By having two line sensors 14, 15 having different energy bands for detection, the X-ray inspection device 10 obtains a graph of the detection results of the first line sensor 14 (solid line G1) and a graph of the detection results of the second line sensor 15 (dashed line G2). In the graph of FIG. 4, the horizontal axis corresponds to the position of each X-ray detection element 14a, 15a (position in the width direction of the belt of the conveyor 12), and the vertical axis indicates the transmitted X-ray amount detected by the X-ray detection elements 14a, 15a.

The X-ray detector of the inspection image display device of the present invention does not necessarily have a plurality of line sensors, but, for example, the X-ray detection unit may have a single direct-conversion line sensor capable of detecting X-rays using a photon counting scheme. A direct-conversion line sensor is, for example, a multi-energy sensor that detects X-rays transmitted through the products in each of a plurality of energy regions, and includes photon-detecting sensors such as CdTe semiconductor detectors. In this type of line sensor, electron-hole pairs are generated by the arrival of X-ray photons. Energy (photon energy) is detected through the generation of these electron-hole pairs.

### (2-5) First display

The first display 30 is a display having a touch panel function.

The first display 30 functions as a display unit and an input unit. The first display 30 displays, for example, a transmission image obtained by irradiating X-rays on the products P, an image obtained by processing the transmission image, inspection results, etc. The image obtained by processing the transmission image includes a second difference image (described hereinafter).

The display 30 also accepts various settings and various information inputted from the worker.

### (2-6) Second display

The second display 40 functions as a display unit. The second display 40 is installed, for example, in the work area. The second display 40 is preferably a large display so that the worker can easily identify undesirable parts of the products P.

The second display 40 displays the transmission image, the second difference image, the inspection results, etc., for the products P conveyed to the work area where the second display 40 is installed.

### (2-7) Controller

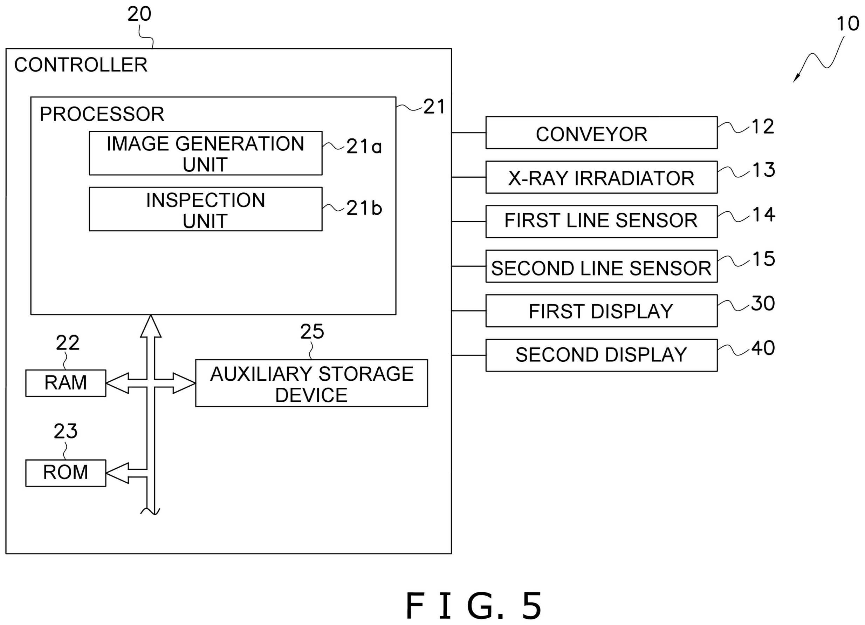

The controller 20 is electrically connected to the conveyor 12, the X-ray irradiator 13, the line sensors 14, 15, the first display 30, and the second display 40 (see FIG. 5).

The controller 20 controls operations of each part of the X-ray inspection device 10. The controller 20 also generates images on the basis of the detection results of the X-ray transmission amount from the line sensors 14, 15, and displays the images on the first display 30 and the second display 40. In addition, the controller 20 performs inspections based on the detection results of the X-ray transmission amount from the line sensors 14, 15.

As shown in FIG. 5, the controller 20 is a computer having, *inter alia,* a processor 21 (CPU, MPU, GPU, etc.), RAM 22, ROM 23, an auxiliary storage device 25 (HDD, SSD, etc.), a display control circuit to control displaying of data on the displays 30, 40, a key input circuit that receives key input data inputted by the worker via the display 30, and a communication port that enables connection to external devices and networks such as a LAN. The processor 21, RAM 22, ROM 23, auxiliary storage device 25, etc., are interconnected via bus lines such as address buses and data buses.

The ROM 23 and the auxiliary storage device 25 (hereinafter, the ROM 23 and the auxiliary storage device 25 are collectively referred to as a storage unit) store, *inter alia,* various programs executed by the processor 21, various information such as parameters and settings used for inspection, and inspection results. The parameters used for inspection stored in the storage unit are parameters necessary for determining whether or not extraneous matter is present in the products P, and include, for example, a threshold value of the transmitted X-ray amount to distinguish between extraneous matter and the products P. The settings used for inspection stored in the storage unit include, for example, information on the inspection speed of the products P.

The processor 21 functions as, for example, an image generation unit 21a and an inspection unit 21b by executing the programs stored in the storage unit.

### (2-7-1) Image generation unit

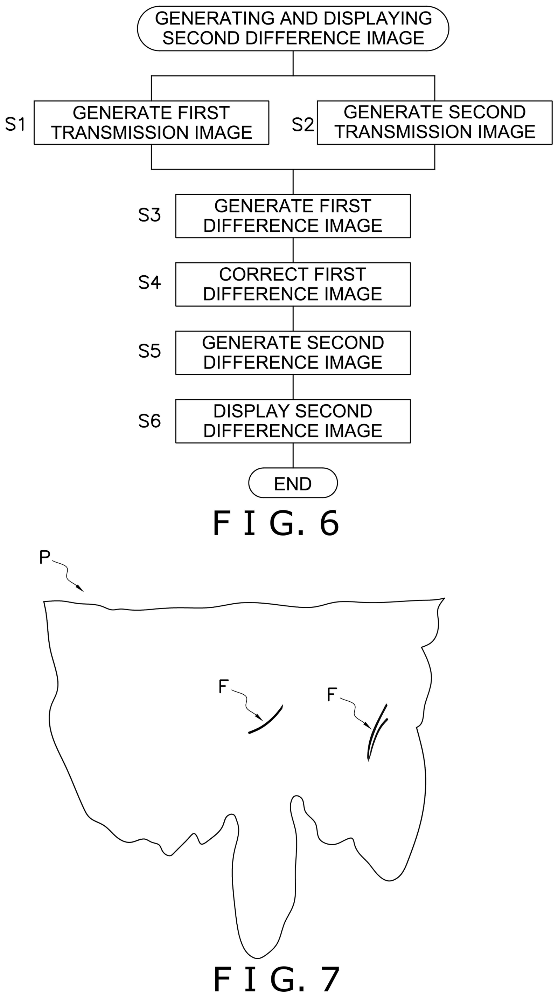

The processing performed by the image generation unit 21a (in particular, the process of generating the second difference image) shall be explained with reference to the flowchart in FIG. 6.

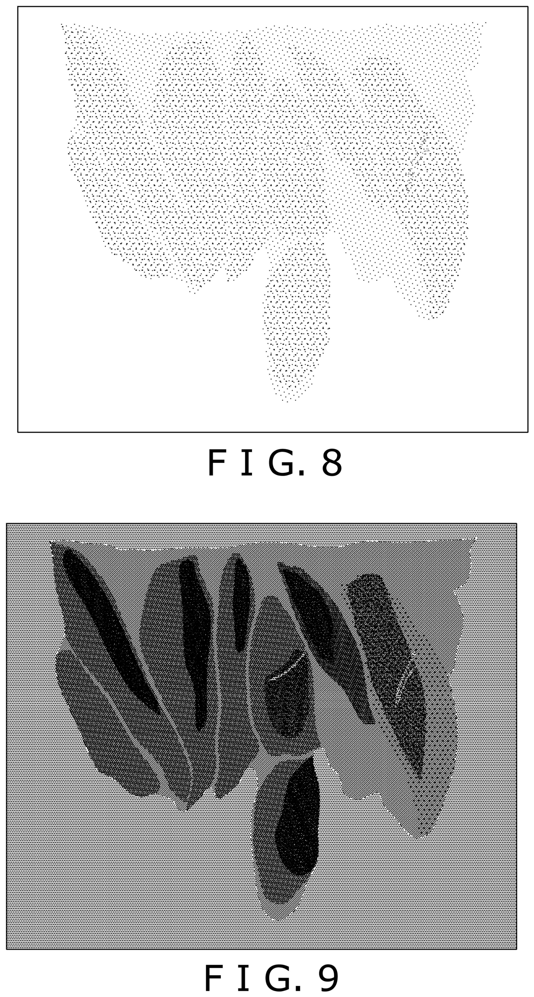

When the controller 20 acquires the detection results of the X-rays irradiated on the products P from the line sensors 14, 15, the image generation unit 21a generates a low-energy transmission image on the basis of the transmitted X-ray amount of the low-energy X-rays detected by the first line sensor 14 (step S1), and generates a high-energy transmission image on the basis of the transmitted X-ray amount of the high-energy X-rays detected by the second line sensor 15 (step S2). In this embodiment, the low-energy transmission image is an example of the first transmission image based on the detection result of the X-rays in the first energy band in the claims, and the high-energy transmission image is an example of the second transmission image based on the detection result of the X-rays in the second energy band in the claims. Hereinafter, the low-energy transmission image is referred to as the first transmission image, and the high-energy transmission image is referred to as the second transmission image. FIG. 8 is a schematic diagram of a first transmission image generated for a product P containing extraneous matter F shown in FIG. 7.

The image generation unit 21a further performs a subtraction process using the first and second transmission images to generate a first difference image (step S3). For example, the image generation unit 21a performs an adjustment to match luminance values (grayscale values) of portions corresponding to the product P between the first and second transmission images (for example, by multiplying luminance values of the pixels of the second transmission image by a luminance conversion function prepared according to the type of product P), then performs a difference process to calculate the difference in the luminance values of each pixel, and generates a first difference image in which the difference between the luminance values of the pixels corresponding to the extraneous matter F and the luminance values of the pixels not corresponding to the extraneous matter F is large. When performing the subtraction process, the image generation unit 21a actually also performs processing such as size matching between the first and second transmission images (see Patent Literature 1 (Japanese Laid-open Patent Publication No. 2012-73056)), but an explanation of this processing is omitted here. FIG. 9 is a schematic depiction of the first difference image generated for the product P containing the extraneous matter F shown in FIG. 7.

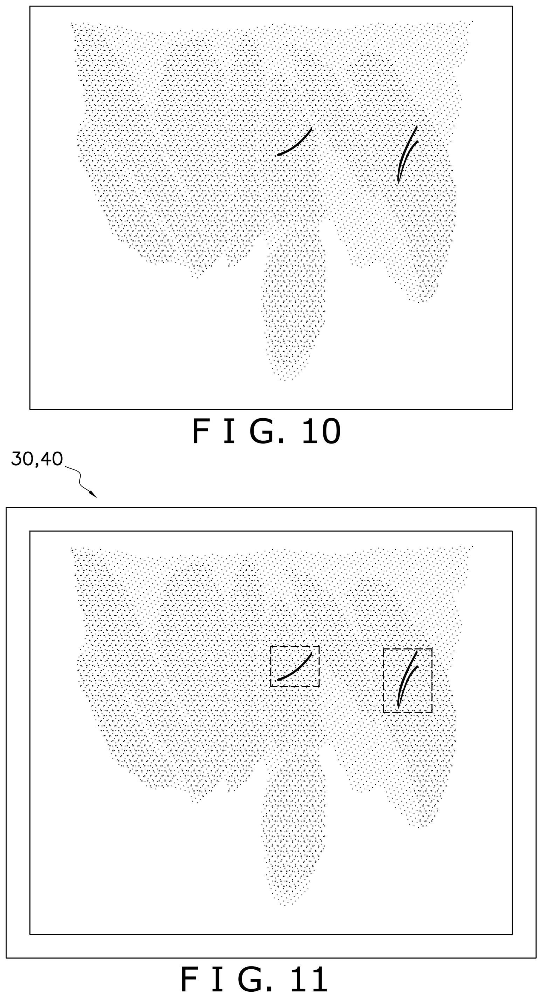

The image generation unit 21a furthermore performs a subtraction process using either the first or second transmission image and the first difference image to generate a second difference image (step S5). For example, the image generation unit 21a performs a subtraction process between the first transmission image and the first difference image to generate the second difference image. FIG. 10 is a schematic depiction of the second difference image generated for the product P containing the extraneous matter F shown in FIG. 7.

The reason for generating the second difference image shall now be explained.

In the inspection processing system 100, as described above, the product P is conveyed to the work area by the downstream conveyor 60, and in the work area, the worker removes extraneous matter F such as bones from the product P as shown in FIG. 7. In the product P conveyed to the work area, the extraneous matter F is not necessarily present on the surface of the product P. Therefore, the worker observes the image displayed on the display unit (e.g., the second display 40) to confirm the location of the extraneous matter F and then performs the work of removing the extraneous matter F.

During such work, it is possible for the X-ray inspection device 10 to display the first or second transmission image of the product P on the displays 30, 40 for the worker to view.

For example, a case is assumed in which the X-ray transmissibility of the extraneous matter F is lower than that of the product P. In this case, in the transmission image, positions where the extraneous matter F (undesirable parts) is present are displayed darker (more intensely) than positions where only the product P is present. The following explanation mainly uses a case in which the X-ray transmissibility of the extraneous matter F is lower than that of the product P as an example, but there are also cases where the X-ray transmissibility of the extraneous matter F is higher than that of the product P. In this case, the positions where the extraneous matter F are present in the first and second transmission images are displayed brighter (lighter) than the positions where only the product P is present.

In cases such as where the X-ray transmissibility of the product P and the extraneous matter F differ significantly, the worker can recognize with relative ease the positions of the extraneous matter F from the first and second transmission images. However, for example, in cases such as where the X-ray transmissibility of the product P and the extraneous matter F are comparatively similar, or the extraneous matter F has little thickness, as shown in FIG. 8, areas where the extraneous matter F is present (see FIG. 7) are displayed slightly darker than areas where only the product P is present, but it may be difficult to visually identify the extraneous matter F.

To solve this problem of difficulty in visually identifying the extraneous matter F, the image generation unit 21a generates a second difference image that makes the extraneous matter F easier to see. The reason why the extraneous matter F is easier to see in the second difference image is as follows.

In the first difference image generated by the image generation unit 21a performing a subtraction process between the first and second transmission images, as shown in FIG. 9, the positions where the extraneous matter F is present are displayed brightly, contrary to the first transmission image in FIG. 8. In the first difference image, the undesirable parts where the extraneous matter F is present and the parts where only the product P is present (parts without the extraneous matter F) are easier to distinguish compared to the first transmission image. Furthermore, when the image generation unit 21a generates a second difference image by subtracting the luminance value of the corresponding pixel in the first difference image from each pixel of the first transmission image, the undesirable parts where the extraneous matter F is present will be displayed darker (more intensely) compared to the first transmission image (because the luminance values of the undesirable parts where the extraneous matter F is present are higher in the first difference image) (see FIG. 10).

Furthermore, in cases such as where the X-ray transmissibility of the extraneous matter F is higher than that of the product P, the undesirable parts where extraneous matter F is present will be displayed brighter (lighter) in the second difference image compared to the first transmission image.

When such a second difference image is displayed on displays 30, 40 (step S6), it is easier for the worker to recognize the undesirable parts of the product P from the image compared to when the first transmission image or the second transmission image is displayed on displays 30, 40.

In order to make it easier for the worker to recognize the extraneous matter F in the second difference image, the image generation unit 21a may correct the luminance values of at least some pixels of the first difference image, as in step S4 of FIG. 6, and then perform a subtraction process using either the first transmission image or the second transmission image and the corrected first difference image to generate the second difference image.

There are no limitations as to the correction method, but if the first difference image is an image in which the extraneous matter F is displayed brightly, as shown in FIG. 9, the image generation unit 21a may correct to increase the luminance values of pixels having a luminance value greater than a first luminance value of the first difference image and then perform a subtraction process using either the first transmission image or the second transmission image and the corrected first difference image to generate the second difference image. The first luminance value in this example is a value slightly less than the average luminance value estimated to appear at positions where the extraneous matter F is present in the first difference image, or the minimum luminance value estimated to appear at positions where the extraneous matter F is present in the first difference image, when the expected type of extraneous matter F is present in product P. With this configuration, the positions where the extraneous matter F is present in the first difference image are displayed even brighter (compared to before correction). As a result, in the second difference image, the positions where the extraneous matter F is present are displayed even darker (compared to when no correction is performed on the first difference image).

In the first difference image, if the areas where the extraneous matter F are present appear darker than the areas where only the product P is present, in step S4, the image generation unit 21a may, conversely to the case described above, perform a correction that reduces the luminance value of pixels having a luminance less than a second luminance value of the first difference image, and then generate a second difference image by performing a subtraction process using either the first or second transmission image and the corrected first difference image. The second luminance value in this example is slightly larger than the average luminance value estimated to appear at the locations of the extraneous matter F in the second difference image, or is the maximum luminance value estimated to appear at the locations of the extraneous matter F in the first difference image, when the assumed type of extraneous matter F is present in the product P. With this configuration, the locations where the extraneous matter F is present in the first difference image are displayed even darker (compared to before correction). As a result, in the second difference image, the locations of the extraneous matter F are displayed even brighter (compared to when no correction is performed on the first difference image).

When displaying the second difference image on the displays 30, 40 (step S6), the locations of the extraneous matter F detected by the inspection unit 21b (described hereinafter) may be indicated within the second difference image, as shown by the dotted lines in FIG. 11. The display indicating the locations of the extraneous matter F detected by the inspection unit 21b does not necessarily show only the exact locations of the extraneous matter F, but may also show approximate areas surrounding the locations of the extraneous matter F.

From viewpoints such as ease of work, the worker may sometimes flip the product P over from the state where the product P is transported by the conveyor 12 in the work area, and then perform the work of processing the undesirable parts (in this case, removing the extraneous matter F) in the product P. For example, from the perspective of conveying stability, it is preferable to have one surface of the product P in contact with the conveying surface of the conveyor 12, but when removing extraneous matter F, it may be better to orient the surface of the product P that was in contact with the conveying surface of the conveyor 12 towards the side visible to the worker. In such cases, if the generated second difference image is displayed directly on the displays 30, 40, the product P in the second difference image and the actual product P will be facing in opposite directions (flipped), making it difficult for the worker to recognize undesirable parts from the image displayed on the displays 30, 40.

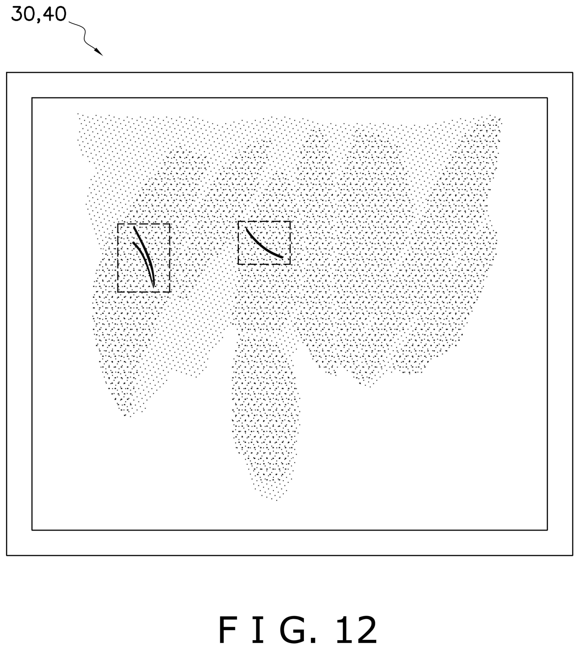

Therefore, it is preferable that the controller 20 is configured to invert (flip) the second difference image, as shown in FIG. 12, in accordance with the needs of the worker (in accordance with the operation performed by the worker on the first display 30 serving as an input unit), and then display the second difference image on the displays 30, 40. When displaying the second difference image in this inverted manner, as shown by the dotted lines in FIG. 12, the locations of the extraneous matter F detected by the inspection unit 21b (described hereinafter) may be indicated within the second difference image on the displays 30, 40. However, the invention is not limited to this example; another option is that only the inverted second difference image be displayed on displays 30, 40.

### (2-7-2) Inspection unit

The inspection unit 21b determines whether or not undesirable parts (in this case, extraneous matter F) are present in the product P based on the first difference image or the second difference image obtained from the first transmission image and the second transmission image. Specifically, the inspection unit 21b performs the following process.

If the product P contains no extraneous matter F, the luminance values of each pixel in the regions where the product P is present in the first difference image or the second difference image will be approximately the same. On the other hand, if extraneous matter F is present in the product P, the pixels at the positions corresponding to the extraneous matter F in the first difference image or the second difference image will be displayed darker (or brighter, depending on the type of extraneous matter F) than the surrounding pixels corresponding to the parts of the product P where no extraneous matter F is present. The inspection unit 21b determines whether or not the extraneous matter F is present on the basis of whether or not such pixels, which are darker (or brighter) than the surroundings, appear in the first difference image or the second difference image due to the extraneous matter F.

The inspection unit 21b may determine (inspects for) whether or not extraneous matter F is present in the product P on the basis of a rule (for example, whether or not there are pixels darker/brighter than a predetermined threshold in the regions where the product P is present in the first transmission image or the second transmission image).

Alternatively, the inspection unit 21b may has a machine learning model that employs methods such as neural networks, support vector machines, and random forests, using training data (image data of the product P without extraneous matter F and image data of the product P with extraneous matter F). The inspection unit 21b may use the machine learning model to determine (inspect) whether or not extraneous matter F is present from the first difference image or the second difference image of the product P.

### (3) Characteristics

(3-1)
The X-ray inspection device 10 according to one example of the inspection image display device includes a conveyor 12 serving as a conveying unit, an X-ray irradiator 13 serving as an X-ray source, an X-ray detector, an image generation unit 21a, and a display unit. In the present embodiment, the X-ray detector includes a first line sensor 14 and a second line sensor 15. Hereinafter, the first line sensor 14 and the second line sensor 15 are collectively referred to as the X-ray detector. The display unit includes a first display 30 and a second display 40. Hereinafter, the first display 30 and the second display 40 are collectively referred to as the display unit.

The conveyor 12 conveys products P. The X-ray irradiator 13 irradiates X-rays on the products P conveyed by the conveyor 12. The X-ray detection unit detects X-rays of a first energy band (a low energy band) and X-rays of a second energy band (a high energy band) irradiated on the products P. The image generation unit 21a generates a first difference image by performing a subtraction process using a first transmission image based on the detection results for the X-rays of the first energy band and a second transmission image based on the detection results for the X-rays of the second energy band. The image generation unit 21a generates a second difference image by performing a subtraction process using the first difference image and either the first transmission image or the second transmission image. The display unit displays the second difference image.

In this X-ray inspection device 10, a second difference image in which undesirable parts are emphasized is displayed on the display unit. Therefore, it is easy for a worker to recognize undesirable parts in the products P from the image displayed on the display unit.

(3-2)
The image generation unit 21a may correct luminance values of at least some pixels of the first difference image, and perform a subtraction process using the corrected first difference image and either the first transmission image or the second transmission image to generate the second difference image.

In this case, in the X-ray inspection device 10, undesirable parts can be emphasized in the second difference image by generating the second difference image using the corrected first difference image. In other words, the X-ray inspection device 10 can generate and display a second difference image that makes it easier to recognize undesirable parts in the products P.

(3-3)
For example, the image generation unit 21a may perform a correction to increase the luminance value of pixels having a luminance greater than a first luminance value of the first difference image, or a correction to decrease the luminance value of pixels having a luminance less than a second luminance value of the first difference image, and perform a subtraction process using the corrected first difference image and either the first transmission image or the second transmission image to generate the second difference image.

In this case, in the first difference image, the correction is performed on the pixels corresponding to the undesirable parts, which have high or low luminance in comparison to other parts (the contrast between the luminance of the pixels corresponding to the undesirable parts and the luminance of the pixels corresponding to other parts is increased). Thereafter, a subtraction process is performed on the first difference image and either the first transmission image or the second transmission image. Therefore, a second difference image that makes it particularly easy to recognize undesirable parts can be generated and displayed.

(3-4)
The X-ray inspection device 10 includes an inspection unit 21b. The inspection unit 21b inspects whether or not undesirable parts (extraneous matter F in this embodiment) are present using the first difference image or the second difference image. The display unit indicates, in the second difference image, locations where the undesirable parts detected by the inspection unit 21b are present.

Since the locations of the undesirable parts, which can be detected on the basis of the first difference image or the second difference image, are displayed in the second difference image, it is less likely that the worker will overlook the presence of the undesirable parts.

In particular, when the second difference image is used for inspection, the undesirable parts are emphasized in areas where only the product P is present in the second difference image, and the inspection unit 21b can therefore detect undesirable parts in the product P with high sensitivity.

(3-5)
In the X-ray inspection device 10, the display unit may display the second difference image inverted.

With such a configuration, even when the worker in the work area flips over the product P after the product has been conveyed by the conveyor 12 and then performs work to process undesirable parts of the product P, it is easy for the worker to identify the undesirable parts from the second difference image displayed on the display unit.

### (4) Modifications

### (4-1) Modification A

In the above embodiment, the inspection image display device is described using the X-ray inspection device 10, which performs X-ray inspection, as an example. However, the inspection image display device is not limited to the X-ray inspection device 10 and may be a device that does not perform X-ray inspection (does not have the function of the inspection unit 21b), but merely generates and displays at least the second difference image.

### REFERENCE SIGNS LIST

- 10: X-ray inspection device (inspection image display device)
- 12: Conveyor (conveying unit)
- 13: X-ray irradiator (X-ray source)
- 14: First line sensor (X-ray detector)
- 15: Second line sensor (X-ray detector)
- 21a: Image generation unit
- 21b: Inspection unit
- 30: First display (display unit)
- 40: Second display (display unit)
- P: Product

### PRIOR ART LITERATURE

### PATENT LITERATURE

Patent Literature 1: Japanese Laid-open Patent Publication No. 2019-107605

## Claims

1. An inspection image display device comprising:
a conveying unit configured to convey products;
an X-ray source configured to irradiate X-rays on the products conveyed by the conveying unit;
an X-ray detector configured to detect X-rays of a first energy band and X-rays of a second energy band that have passed through the products;
an image generation unit configured to:
generate a first difference image by performing a subtraction process using a first transmission image based on the detection results for the X-rays of the first energy band and a second transmission image based on the detection results for the X-rays of the second energy band, and
generate a second difference image by performing a subtraction process using the first difference image and either the first transmission image or the second transmission image; and
a display unit configured to display the second difference image.

2. The inspection image display device according to claim 1,
wherein the image generation unit is configured to:
correct the luminance values of at least some pixels of the first difference image, and
perform a subtraction process using the corrected first difference image and either the first transmission image or the second transmission image to generate the second difference image.

3. The inspection image display device according to claim 2,
wherein the image generation unit is configured to:
perform a correction to increase the luminance values of pixels having a luminance greater than a first luminance value of the first difference image, or a correction to decrease the luminance values of pixels having a luminance less than a second luminance value of the first difference image, and
perform a subtraction process using the corrected first difference image and either the first transmission image or the second transmission image to generate the second difference image.

4. The inspection image display device according to any one of claims 1 to 3,
further comprising an inspection unit configured to inspect for whether or not an undesirable part is present using the first difference image,
wherein the display unit is configured to indicate, in the second difference image, a location where the undesirable part detected by the inspection unit is present.

5. The inspection image display device according to any one of claims 1 to 3,
further comprising an inspection unit to configured to inspect for whether or not an undesirable part is present using the second difference image,
wherein the display unit is configured to indicate, in the second difference image, a location where the undesirable part detected by the inspection unit is present.

6. The inspection image display device according to any one of claims 1 to 5,
wherein the display unit is configured to display the second difference image inverted.
